# EUROPEAN PATENT SPECIFICATION

(11) **EP 3 751 913 B1**
(45) Date of publication and mention of the grant of the patent: **09.07.2025**
(21) Application number: 18904840.8
(22) Date of filing: 09.02.2018
(51) Int. Cl.: H04W 52/06, H04W 52/34, H04L 5/00, H04W 52/36, H04W 88/02

(54) **USER EQUIPMENT**
BENUTZERAUSRÜSTUNG
ÉQUIPEMENT UTILISATEUR

(43) Date of publication of application: 16.12.2020
(73) Proprietor: NTT DOCOMO, INC., Chiyoda-ku, Tokyo 100-6150 (JP)
(72) Inventor: OSAWA, Ryosuke, Chiyoda-ku, Tokyo 100-6150 (JP); UCHINO, Tooru, Chiyoda-ku, Tokyo 100-6150 (JP); ANDOU, Kei, Chiyoda-ku, Tokyo 100-6150 (JP); HARADA, Hiroki, Chiyoda-ku, Tokyo 100-6150 (JP)
(74) Representative: Hoffmann Eitle
(86) International application number: PCT/JP2018/004730
(87) International publication number: WO 2019/155636

(56) References cited:
- EP-A1- 3 711 382
- WO-A1-2017/220635
- ERICSSON: "Power headroom reporting requirements", vol. RAN WG4, no. Stockholm, Sweden; 20160822 - 20160826, 21 August 2016 (2016-08-21), XP051128371, Retrieved from the Internet <URL:http://www.3gpp.org/ftp/Meetings_3GPP_SYNC/RAN4/Docs/> [retrieved on 20160821]
- ERICSSON ET AL: "Power Headroom Reporting Range in LTE-A", 3GPP DRAFT; R4-103213 PH RANGE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG4, no. Madrid, Spain; 20100823, 17 August 2010 (2010-08-17), XP050454231
- HUAWEI ET AL: "RRM impact of further NB-IoT enhancement", vol. RAN WG4, no. Berlin, Germany; 20170821 - 20170825, 20 August 2017 (2017-08-20), XP051321381, Retrieved from the Internet <URL:http://www.3gpp.org/ftp/Meetings_3GPP_SYNC/RAN4/Docs/> [retrieved on 20170820]
- NTT DOCOMO; INC: "Remaining issue on PHR", 3GPP TSG-RAN WG2 NR AD HOC 1801 R2-1801406, 26 January 2018 (2018-01-26), XP051386815
- CATT: "PHR MAC CE for EN-DC", 3GPP TSG-RAN WG2#ADHOC R2-1800169, 26 January 2018 (2018-01-26), XP051386053

## Description

### Technical Field

The present disclosure relates to a user terminal of a next-generation mobile communication system.

### Background Art

In Universal Mobile Telecommunications System (UMTS) networks, for the purpose of higher data rates and lower latency, Long Term Evolution (LTE) has been specified (Non-Patent Literature 1). Furthermore, for the purpose of a larger capacity and higher sophistication than those of LTE (LTE Rel. 8 and 9), LTE-Advanced (LTE-A and LTE Rel. 10, 11, 12 and 13) has been specified.

LTE successor systems (also referred to as, for example, Future Radio Access (FRA), the 5th generation mobile communication system (5G), 5G+ (plus), New Radio (NR), New radio access (NX), Future generation radio access (FX) or LTE Rel. 14, 15 or subsequent releases) are also studied.

According to legacy LTE (e.g., LTE Rel. 8 to 13), a user terminal (UE: User Equipment) feeds back a Power Headroom Report (PHR) including information related to an uplink Power Headroom (PH) per serving cell to an apparatus (e.g., base station) on a network side.

The base station decides uplink transmit power of the UE based on the PHR, and notifies the UE of a Transmit Power Control (TPC) command such that the uplink transmit power becomes appropriate.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April 2010

WO 2017/220635 A1 relates to a method of determining a reporting configuration associated with a coverage level of a wireless device are provided. The method is performed by a wireless device and includes obtaining information indicating a coverage level of the wireless device. Further, the method includes determining, from amongst different reporting configurations respectively associated with different coverage levels of the wireless device, the reporting configuration associated with the coverage level indicated by the obtained information.

ERICSSON: "Power headroom reporting requirements" relates to a possibility to resolve the FFS and correspondingly proposes two reporting tables.

ERICSSON ET AL: "Power Headroom Reporting Range in LTE-A" relates to the reporting range of the PH due to the introduction of new CPE 27 dBm power class. According to the document, there is no strong motivation to lower the existing PH reporting range below -23 dB to support new CPE power class.

### Summary of Invention

### Technical Problem

A future radio communication system (e.g., NR) also supports a PHR similar to LTE.

However, according to NR, a range that can be taken by a value (e.g., PH) reported by the PHR is assumed to be large compared to the case of LTE. Assuming that mapping of an index indicated by a field included in the PHR and a value of, for example, the PH is similar to that of LTE, it is not possible to express a sufficient range. In this case, there is a problem that it is not possible to perform appropriate transmit power control, and a communication throughput and communication quality deteriorate.

It is therefore one of objects of the present disclosure to provide a user terminal that can report an appropriate PH in future radio communication systems, too.

### Solution to Problem

A user terminal according to one aspect of the present disclosure includes: a control section and a transmitting section, as defined in appended claim 1.

### Advantageous Effects of Invention

According to one aspect of the present disclosure, it is possible to report an appropriate PH in future radio communication systems, too.

### Brief Description of Drawings

Fig. 1 is a diagram illustrating one example of a PHR MAC CE according to NR.
Fig. 2 is a diagram illustrating one example of a multiple entry PHR MAC CE according to NR.
Figs. 3A and 3B are diagrams illustrating one example of a PHR MAC CE according to one embodiment.
Fig. 4 is a diagram illustrating one example of a schematic configuration of a radio communication system according to one embodiment.
Fig. 5 is a diagram illustrating one example of an overall configuration of a radio base station according to the one embodiment.
Fig. 6 is a diagram illustrating one example of a function configuration of the radio base station according to the one embodiment.
Fig. 7 is a diagram illustrating one example of an overall configuration of a user terminal according to the one embodiment.
Fig. 8 is a diagram illustrating one example of a function configuration of the user terminal according to the one embodiment.
Fig. 9 is a diagram illustrating one example of hardware configurations of the radio base station and the user terminal according to the one embodiment.

### Description of Embodiments

NR also supports a PHR similar to LTE. The PHR may be transmitted by a Medium Access Control (MAC) signaling by using a Physical Uplink Shared Channel (PUSCH). For example, the PHR is notified by using a PHR MAC Control Element (CE) included in an MAC Protocol Data Unit (PDU).

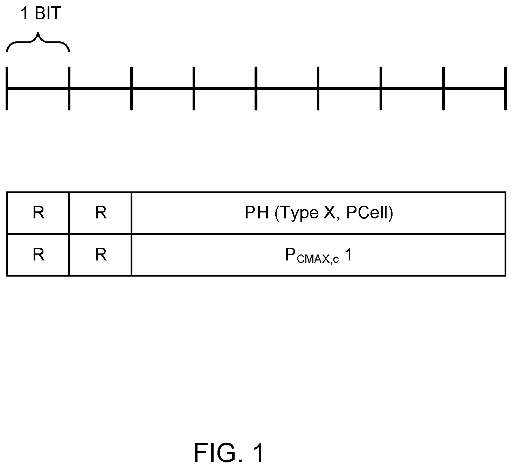

Fig. 1 is a diagram illustrating one example of the PHR MAC CE according to NR. Fig. 1 corresponds to a single entry PHR MAC CE. It is studied that the MAC CE includes 2 octets (= 16 bits). "R" in Fig. 1 each indicates a 1-bit reservation field, and is set to, for example, a value of "0".

"PH (a Type X or a PCell)" in Fig. 1 indicates a 6-bit field, and indicates, for example, an index related to a Type X PH of a Primary Cell (PCell). The index related to the PH is associated with a specific PH level (dB). In addition, for example, a Type 1 PH may be a PH in a case where a PUSCH is taken into account (e.g., only the PUSCH is taken into account). A Type 2 PH may be a PH in a case where a PUCCH is taken into account (e.g., the PUSCH and the PUCCH are taken into account). A Type 3 PH may be a PH in a case where a Sounding Reference Signal (SRS) is taken into account (e.g., the PUSCH and the SRS are taken into account).

'P_{CMAX,c} 1' in Fig. 1 indicates a 6-bit field, and indicates an index related to P_{CMAX,c} used for calculation of the above PH field. The index related to P_{CMAX,c} is associated with a specific UE transmit power level (dB). In addition, P_{CMAX,c} may be referred to as maximum transmit power (maximum permitted transmit power) of a UE in a serving cell c.

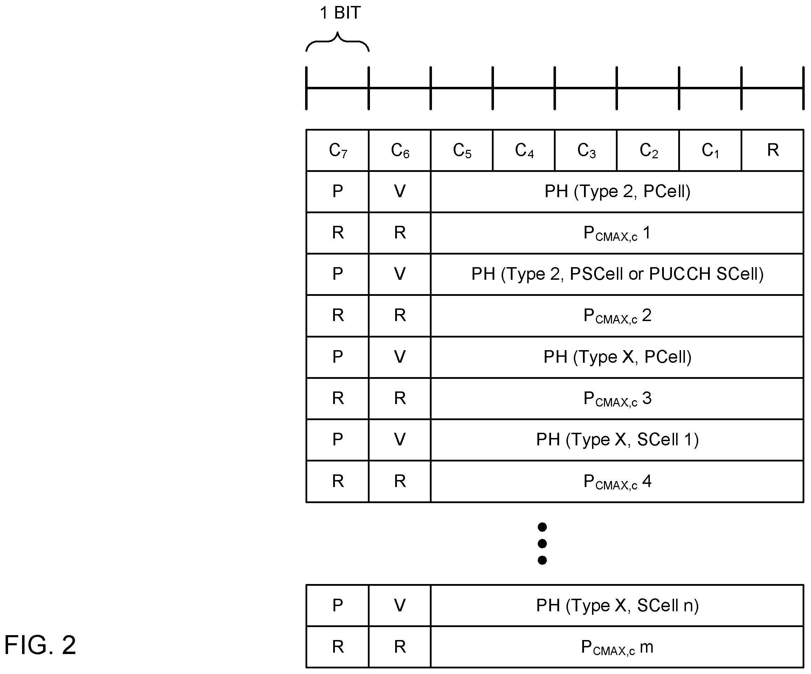

In addition, NR supports a multiple entry PHR MAC CE, too, that resembles the above-described single entry (2 octets) and includes a plurality of items of data. Fig. 2 is a diagram illustrating one example of the multiple entry PHR MAC CE according to NR.

"R" in Fig. 2 is a reservation field similar to that in Fig. 1. A 6-bit field including a word "PH" in Fig. 2 indicates a PH field of a corresponding type and cell (a PCell, a Primary-Secondary Cell (PSCell), a PUCCH-SCell or an SCell).

A 6-bit field including a word "P_{CMAX,c}" in Fig. 2 is a P_{CMAX,c} field that indicates P_{CMAX,c} used for calculation of a last PH field. "Cᵢ" in Fig. 2 is a field that indicates whether or not a PH field of an SCell associated with an SCell index i is included in the PHR.

"V" in Fig. 2 is a field that indicates whether a value of a PH associated with a last PH field is based on real transmission (V = 1) or is based on a reference format (V = 0). The PH based on the reference format may be referred to as a virtual PH. In addition, in a case of V = 0, the corresponding "P_{CMAX,c}" field may be omitted.

By the way, NR supports a millimeter Wave (mmW) whose wavelength is approximately 1 mm to 10 mm. A millimeter wave band may be referred to as an Extremely High Frequency (EHF).

A frequency range (above-24 GHz) higher than 24 GHz and/or the mmW band may be referred to as a Frequency Range 2 (FR2). Furthermore, a frequency (sub-6 GHz) lower than 6 GHz may be referred to as a Frequency Range 1 (FR1). A band used by conventional LTE (e.g., LTE Rel. 8 to 14) corresponds to the FR1.

Regarding the FR1, maximum transmit power may be specified by using Total Radiated Power (TRP). The maximum transmit power described herein is, for example, P_{CMAX} and above-described P_{CMAX,c} that are maximum transmit power (maximum permitted transmit power) of the UE.

Regarding the FR2, it is studied to specify maximum transmit power by using Effective Isotropic Radiated Power (EIRP) or effective radiated power. For example, 3GPP TS 38.101-2 V15.0.0 (2017-12) Table 6.2.1-2 discloses 43 dBm on an EIRP basis as the UE maximum transmit power of the FR2. Hence, values that can be taken by P_{CMAX} and P_{CMAX,c} in the FR2 are assumed to be large compared to the FR1.

According to LTE, the index related to the PH included in the PHR can take a value from 0 to 63. An index = 0 is associated with -23 dB ≤ PH < -22 dB, an index = 1 is associated with -22 dB ≤ PH < -21 dB, ..., an index = 62 is associated with 39 dB ≤ PH < 40 dB, and an index = 63 is associated with 40 dB ≤ PH.

According to LTE, the index related to P_{CMAX,c} included in the PHR can take a value from 0 to 63. An index = 0 is associated with P_{CMAX,c} < -29 dBm, an index = 1 is associated with -29 dBm ≤ P_{CMAX,c} < -28 dBm, ..., an index = 62 is associated with 32 dBm ≤ P_{CMAX,c} < 33 dBm, and an index = 63 is associated with 33 dBm ≤ P_{CMAX,c}.

That is, according to LTE, a range of a value of a PH that can be reported is from -23 dB to 40 dB, and a step size (resolution) of the value of the PH per increase of the index is 1 dB. Furthermore, a range of a value of P_{CMAX,c} that can be reported is from -29 dBm to 33 dBm, and a step size of the value of the PH per increase of the index is 1 dBm.

As described above, according to NR, values that can be taken by the PH, P_{CMAX} and P_{CMAX,c} are assumed to be large compared to the case of LTE. However, assuming that the above step sizes of the PH and/or P_{CMAX,c} are 1 dB (dBm) similar to LTE, the 6-bit field of the PHR cannot express a sufficient range. In this case, there is a problem that it is not possible to perform appropriate transmit power control, and a communication throughput and communication quality deteriorate.

Hence, the inventors of the present invention have conceived a method for appropriately switching a step size and/or a range of at least one value of the PH and P_{CMAX,c} reported by the PHR MAC CE.

An embodiment will be described in detail below with reference to the drawings. A radio communication method according to each embodiment may be each applied alone or may be applied in combination.

In addition, the embodiment will be described below supposing that a PHR is transmitted by using an MAC CE. However, the invention described in the present disclosure is not limited to this. The following embodiment is applicable even to a case where, for example, the PHR is transmitted by using another signaling. In this case, the PHR MAC CE may be read as another signaling.

In this regard, the another signaling may be a higher layer signaling, a physical layer signaling (e.g., Downlink Control Information (DCI)) or a combination of these signalings.

For the higher layer signaling, for example, a Radio Resource Control (RRC) signaling, an MAC signaling and broadcast information (e.g., a Master Information Block (MIB) or a System Information Block (SIB)) may be used.

Furthermore, a more appropriate unit of dB or dBm will be used for the step size and the range below unless the unit is described in particular. For example, that the step size is X may mean that the step size is X dB regarding the PH, or may mean that the step size is X dBm regarding P_{CMAX,c}. Furthermore, the unit may correspond to a unit other than dB and dBm.

The following description will be made from a viewpoint that the step size is switched for ease of description. However, one of ordinary skill in art will understand that , when the step size changes, the range also changes following the change of the step size. The "step size" in this description may be read as a "range" or "at least one of the step size and the range". Furthermore, a subject that decides (determines) a step size or a range of a value may be a UE and/or a base station.

### (Radio Communication Method)

According to one embodiment, the UE and/or the base station may determine (may switch and use) a step size of at least one of a PH and P_{CMAX,c} reported by a PHR MAC CE based on at least one of followings:
(1) a specific bit of the PHR MAC CE,
(2) a band in use,
(3) a value of the PH or P_{CMAX,c},
(4) UE capability,
(5) maximum transmit power configured to a cell group, and
(6) an explicit notification.

### <(1) Determination Based on Specific Bit of PHR MAC CE>

Regarding above (1), the specific bit of the PHR MAC CE may be, for example, one or a plurality of four R fields illustrated in Fig. 1. When, for example, one R field is used as a step size field that indicates a step size, a step size = a first value (e.g., 1) may be assumed in a case of a value of the field = 0, or the step size = a second value (e.g., 2) may be assumed in a case of the value of the field = 1.

Step sizes of P_{CMAX,c} and the PH may be indicated separately by using one or two of two R fields before P_{CMAX,c} and the PH. That is, the PHR MAC CE may include a step size field for P_{CMAX,c} and a step size field for the PH.

In addition, in this description, the step size of a value of the PH and the step size of a value of P_{CMAX,c} may be different, or may be the same. For example, in this description, the first value related to the step size of the value of the PH may be different from the first value related to the step size of the value of P_{CMAX,c}. The same applies to the second value, too.

The step sizes of P_{CMAX,c} and the PH may be generically (collectively) indicated by one field. That is, the PHR MAC CE may include the step size fields for P_{CMAX,c} and the PH. In addition, in this case, a meaning of one step size field may be interpreted differently between P_{CMAX,c} and the PH. Furthermore, in a case where the step size fields are generically indicated by the one field, the step size field may be applied to both of P_{CMAX,c} and the PH, or may be applied to only one of P_{CMAX,c} and the PH.

A plurality of fields of the four R fields illustrated in Fig. 1 may be joined and mean one step size field. In the example in Fig. 1, the step size field may be 4 bits at maximum.

In a case of the step size field = 0, a maximum value of P_{CMAX,c} = 23 dBm may be assumed, and, in a case of the step size field = 1, a maximum value of P_{CMAX,c} = 43 dBm may be assumed.

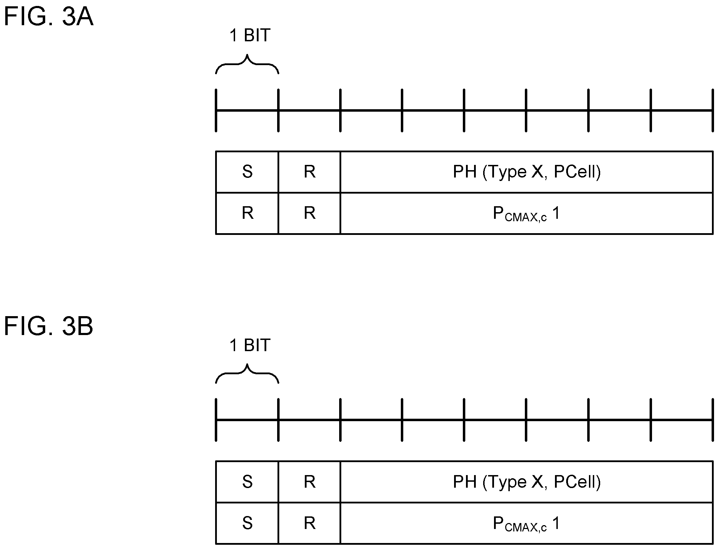

Figs. 3A and 3B are diagrams illustrating one example of the PHR MAC CE according to the one embodiment. As illustrated in Fig. 3A, one of the R fields positioned before a PH field may be used as an "S" (step size) field. As illustrated in Fig. 3B, one of the R fields positioned before the PH field may be used as a step size field for the PH. One of the R fields positioned before a P_{CMAX,c} field may be used as a step size field for P_{CMAX,c}.

### <(2) Determination Based on Band in Use>

In above (2), based on the band in use, the step sizes of both of P_{CMAX,c} and the PH may be determined or only one of the step sizes may be determined.

When, for example, the band in use is a first band (e.g., FR1), the step size = the first value (e.g., 1) may be assumed, and, when the band in use is the second band (e.g., FR2), the step size = the second value (e.g., 2) may be assumed.

In addition, the maximum value of P_{CMAX,c} may be maximum transmit power on the EIRP basis specified by 3GPP TS 38.101-2, or a value (e.g., a value obtained by adding a given offset value to the maximum transmit power) that is based on the maximum transmit power.

In this regard, the "band" may be read as a "Radio Access Technology (RAT)", a "carrier frequency", a "Component Carrier (CC)", a "frequency band", a "frequency resource", a "Bandwidth Part (BWP)". The BWP may be referred to as a partial frequency band or a partial band.

### <(3) Determination Based on Value of PH or P_{CMAX,c}

In above (3), the step size of the PH may be determined based on the value of P_{CMAX,c} in the PHR MAC CE. For example, in a case of P_{CMAX,c} ≤ a first threshold (e.g., 23 dBm), a step size = the first value (e.g., 2) may be determined and, in a case of P_{CMAX,c} > the first threshold, a step size = the second value (e.g., 1) may be determined.

The step size of the PH may be determined (independently) without being based on P_{CMAX,c}. For example, in a case of the PH ≤ a second threshold (e.g., 10 dB), a step size = the first value (e.g., 1) may be determined and, in a case of the PH > the second threshold, a step size = the second value (e.g., 2) may be determined. This is because a larger PH means smaller transmit power, and, even if the PH is roughly reported when the transmit power is small, an influence of an error of the PH is little (can be suitably controlled).

The step size of P_{CMAX,c} itself may be determined based on the value of P_{CMAX,c} in the PHR MAC CE. For example, in a case of P_{CMAX,c} ≤ a third threshold (e.g., 23 dBm), the step size = the first value (e.g., 2) may be determined, and, in a case of P_{CMAX,c} > the third threshold, the step size = the second value (e.g., 1) may be determined.

In addition, it may be determined that the step size is large, or may be determined that the step size is small on the contrary in a range in which the value of the PH (or P_{CMAX,c}) is relatively large compared to a range in which the value of the PH is small.

### <(4) Determination Based on UE Capability>

In above (4), based on the UE capability, the step sizes of both of P_{CMAX,c} and the PH may be determined, or only one of the step sizes may be determined. The UE capability may be, for example, a UE power class.

When, for example, the UE power class is a first power class (e.g., Power class x1), the step size = the first value (e.g., 1) may be determined. When the UE power class is a second power class (e.g., Power class x2), the step size = the second value (e.g., 2) may be determined.

In addition, the maximum value of P_{CMAX,c} may be maximum transmit power of the UE power class specified by 3GPP TS 38.101, or a value (e.g., a value obtained by adding the given offset value to the maximum transmit power) based on the maximum transmit power.

In this regard, the UE capability may be read as a UE type. The UE type may include at least one of followings:
·A handheld terminal (Handheld UE),
·A Customer-Provided Equipment (CPE),
·A smartphone,
·A laptop mounted equipment (e.g., a plug-in device such as a Universal Serial Bus (USB) dongle),
·A laptop embedded equipment,
·A tablet,
·A wearable device,
·A vehicular mounted device,
·A Fixed Wireless Access (FWA) terminal, and
·A fixed mounted device (e.g., a sensor or an automated device).

### <(5) Determination Based on Maximum Transmit Power Configured to Cell Group>

In above (5), when a plurality of Cell Groups (CGs) are configured to the UE, Based on a parameter of maximum transmit power configured per CG, step sizes of both of P_{CMAX,c} and a PH may be determined, or only one of the step sizes may be determined.

In this regard, the maximum transmit power configured to each CG may be, for example, a P-MCG related to an MCG or a P-SCG related to an SCG. In this regard, the number of CGs is not limited to a case of 2 CGs, and, even when the number of CGs is 3 or more, the step sizes of P_{CMAX,c} and/or the PH may be determined based on the parameter of the maximum transmit power configured per CG.

In addition, the CG only needs to be a group related to one or more cells, and may be read as a PUCCH group or a Timing Advance Group (TAG).

### <(6) Determination Based on Explicit Notification>

In above (6), based on an explicit notification, the step sizes of both of P_{CMAX,c} and the PH may be determined, or only one of the step sizes may be determined. The explicit notification may include information of the step sizes and/or a range, and may be notified to the UE by a higher layer signaling (e.g., an RRC signaling or an SIB), a physical layer signaling (e.g., DCI) or a combination of these signalings.

The information of the step sizes may be notified as information that is respectively different between P_{CMAX,c} and the PH, or may be notified as information that is common between P_{CMAX,c} and the PH.

In addition, the information of the step sizes and/or the range may be indicated by at least one unit of a CG unit, a node unit, a base station unit, a CC unit, a UL unit (e.g., a Supplementary Uplink (SUL) unit and/or a Non-Supplementary Uplink (Non-SUL) unit), a PH type unit and a BWP unit. The phrase "in the unit" described herein may mean "independently per (unit)".

For example, the information of the step sizes and/or the range may be included in a CG configuration information element (*CellGroupConfig IE* (Information Element)) of the RRC signaling, and configured per CG. The information of the step sizes and/or the range may be included in a BWP configuration information element (*BandwidthPart-Config IE*) of the RRC signaling, and configured per BWP.

Default step sizes and/or range may be specified by a specification, or may be notified by a signaling (e.g., a higher layer signaling or a physical layer signaling). When receiving explicit information of the step sizes and/or the range, the UE may overwrite default values based on the information, or may use values indicated by the information instead of the default values.

According to the above-described one embodiment of the present disclosure, even when a range of the maximum transmit power of the UE is expanded, it is possible to appropriately report a PHR, and perform flexible transmit power control.

### <Modified Example>

The above-described embodiment is not limited to application to a single entry PHR, and may be applied to other PHRs. When, for example, above (1) is applied to a multiple entry PHR MAC CE, the step size field may be configured by using one or a plurality of P, V and R fields in Fig. 2.

Furthermore, a step size and/or a range indicated for a specific cell (e.g., PCell) may be used for other cells (e.g., PSCells, PUCCH-SCells or SCells).

A PH and/or P_{CMAX,c} may be determined based on two or more above-described (1) to (6). Taking, for example, above-described (2) and (4) into account, it may be determined to use a smaller (or larger) step size of a step size determined based on a band in use or a step size determined based on UE capability.

A determination (switch) condition of the step size according to the above-described embodiment may be used to be read as a bit size of a PH field and/or a P_{CMAX,c} field together with or instead of the step size and the range.

For example, sizes of the PH field and/or the P_{CMAX,c} field may be switched between a plurality of bit sizes based on at least one of above-described (1) to (6). For example, a plurality of these bit sizes may be 6, 7 and 8 bits. A plurality of these bit sizes may include the number of bits less than 6 bits, or may include the number of bits larger than 8 bits.

In addition, when the PH field and/or the P_{CMAX,c} field are expanded by using at least part of the P, V and R fields in the PHR MAC CE as conventionally proposed and illustrated in Figs. 1 and 2, these fields may not be contiguous fields. For example, an R field immediately before P_{CMAX,c} may be used to expand the PH field, or an R field immediately before the PH may be used to expand the P_{CMAX,c} field.

The step size and/or the range may be independently configured per cell, or may be independently configured per BWP (carrier f).

The above-described embodiment may be applied to a PHR of an optional uplink signal. Regarding the above-described embodiment, a plurality of uplink signals may be commonly configured/specified, or each uplink signal may be individually configured/specified. For example, the step size and/or the range may be differently configured per transmission signal such as a PUCCH, a PUSCH or an SRS.

The step size or the range is determined (switched) according to the above-embodiment. However, a table indicating an association between an index and the PH or P_{CMAX,c} may be determined (may be switched) together with or instead of the step size or the range.

Using different step sizes, ranges or tables to calculate the PH/P_{CMAX,c} may be determined by a Logical Channel ID (LCID) included in an MAC header (more accurately an MAC subheader). That is, a case where an MAC PDU includes a first LCID may indicate that a PHR MAC CE associated with a first table is notified, and, a case where the MAC PDC includes a second LCID may indicate that a PHR MAC CE associated with a second table is notified.

The above-described embodiment has described the example where the step size is switched at 2 stages according to the condition. However, the step size may be switched at 3 or more stages.

### (Radio Communication System)

The configuration of the radio communication system according to one embodiment of the present disclosure will be described below. This radio communication system uses one or a combination of the radio communication method according to each of the above embodiment of the present disclosure to perform communication.

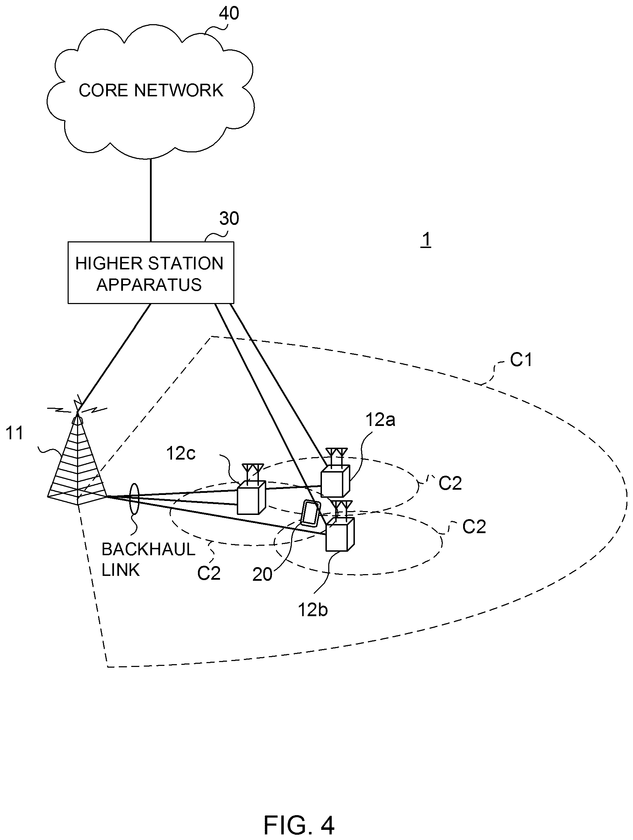

Fig. 4 is a diagram illustrating one example of a schematic configuration of the radio communication system according to the one embodiment. A radio communication system 1 can apply Carrier Aggregation (CA) and/or Dual Connectivity (DC) that aggregate a plurality of base frequency blocks (component carriers) whose 1 unit is a system bandwidth (e.g., 20 MHz) of the LTE system.

In this regard, the radio communication system 1 may be referred to as Long Term Evolution (LTE), LTE-Advanced (LTE-A), LTE-Beyond (LTE-B), SUPER 3G, IMT-Advanced, the 4th generation mobile communication system (4G), the 5th generation mobile communication system (5G), New Radio (NR), Future Radio Access (FRA) and the New Radio Access Technology (New-RAT), or a system that realizes these techniques.

The radio communication system 1 includes a radio base station 11 that forms a macro cell C1 of a relatively wide coverage, and radio base stations 12 (12a to 12c) that are located in the macro cell C1 and form small cells C2 narrower than the macro cell C1. Furthermore, a user terminal 20 is located in the macro cell C1 and each small cell C2. An arrangement and the numbers of respective cells and the user terminals 20 are not limited to the aspect illustrated in Fig. 4.

The user terminal 20 can connect with both of the radio base station 11 and the radio base stations 12. The user terminal 20 is assumed to concurrently use the macro cell C1 and the small cells C2 by CA or DC. Furthermore, the user terminal 20 may apply CA or DC by using a plurality of cells (CCs) (e.g., five CCs or less or six CCs or more).

The user terminal 20 and the radio base station 11 can communicate by using a carrier (also referred to as a legacy carrier) of a narrow bandwidth in a relatively low frequency band (e.g., 2 GHz). On the other hand, the user terminal 20 and each radio base station 12 may use a carrier of a wide bandwidth in a relatively high frequency band (e.g., 3.5 GHz or 5 GHz) or may use the same carrier as that used between the user terminal 20 and the radio base station 11. In this regard, a configuration of the frequency band used by each radio base station is not limited to this.

Furthermore, the user terminal 20 can perform communication by using Time Division Duplex (TDD) and/or Frequency Division Duplex (FDD) in each cell. Furthermore, each cell (carrier) may be applied a single numerology or may be applied a plurality of different numerologies.

The numerology may be a communication parameter to be applied to transmission and/or reception of a certain signal and/or channel, and may indicate at least one of, for example, a Sub-Carrier spacing (SCS), a bandwidth, a symbol length, a cyclic prefix length, a subframe length, a Transmission Time Interval (TTI) length (e.g., slot length), the number of symbols per TTI, a radio frame configuration, filtering processing and windowing processing.

The radio base station 11 and each radio base station 12 (or the two radio base stations 12) can be configured to be connected by way of wired connection (e.g., optical fibers compliant with a Common Public Radio Interface (CPRI) or an X2 interface) or radio connection.

The radio base station 11 and each radio base station 12 are each connected with a higher station apparatus 30 and connected with a core network 40 via the higher station apparatus 30. In this regard, the higher station apparatus 30 includes, for example, an access gateway apparatus, a Radio Network Controller (RNC) and a Mobility Management Entity (MME), yet is not limited to these. Furthermore, each radio base station 12 may be connected with the higher station apparatus 30 via the radio base station 11.

In this regard, the radio base station 11 is a radio base station that has a relatively wide coverage, and may be referred to as a macro base station, an aggregate node, an eNodeB (eNB) or a transmitting/receiving point. Furthermore, each radio base station 12 is a radio base station that has a local coverage, and may be referred to as a small base station, a micro base station, a pico base station, a femto base station, a Home eNodeB (HeNB), a Remote Radio Head (RRH) or a transmitting/receiving point. The radio base stations 11 and 12 will be collectively referred to as a radio base station 10 below when not distinguished.

Each user terminal 20 is a terminal that supports various communication schemes such as LTE and LTE-A, and may include not only a mobile communication terminal (mobile station) but also a fixed communication terminal (fixed station).

The radio communication system 1 applies Orthogonal Frequency-Division Multiple Access (OFDMA) to downlink and applies Single Carrier-Frequency Division Multiple Access (SC-FDMA) and/or OFDMA to uplink as radio access schemes.

OFDMA is a multicarrier transmission scheme that divides a frequency band into a plurality of narrow frequency bands (subcarriers) and maps data on each subcarrier to perform communication. SC-FDMA is a single carrier transmission scheme that divides a system bandwidth into bands including one or contiguous resource blocks per terminal and causes a plurality of terminals to use respectively different bands to reduce an inter-terminal interference. In this regard, uplink and downlink radio access schemes are not limited to a combination of these schemes, and other radio access schemes may be used.

The radio communication system 1 uses a downlink shared channel (PDSCH: Physical Downlink Shared Channel) shared by each user terminal 20, a broadcast channel (PBCH: Physical Broadcast Channel) and a downlink L1/L2 control channel as downlink channels. User data, higher layer control information and a System Information Block (SIB) are conveyed on the PDSCH. Furthermore, a Master Information Block (MIB) is conveyed on the PBCH.

The downlink L1/L2 control channel includes a Physical Downlink Control Channel (PDCCH), an Enhanced Physical Downlink Control Channel (EPDCCH), a Physical Control Format Indicator Channel (PCFICH), and a Physical Hybrid-ARQ Indicator Channel (PHICH). Downlink Control Information (DCI) including scheduling information of the PDSCH and/or the PUSCH is conveyed on the PDCCH.

In addition, the scheduling information may be notified by the DCI. For example, DCI for scheduling DL data reception may be referred to as a DL assignment, and DCI for scheduling UL data transmission may be referred to as a UL grant.

The number of OFDM symbols used for the PDCCH is conveyed on the PCFICH. Transmission acknowledgement information (also referred to as, for example, retransmission control information, HARQ-ACK or ACK/NACK) of a Hybrid Automatic Repeat reQuest (HARQ) for the PUSCH is conveyed on the PHICH. The EPDCCH is subjected to frequency division multiplexing with the PDSCH (downlink shared data channel) and is used to convey DCI similar to the PDCCH.

The radio communication system 1 uses an uplink shared channel (PUSCH: Physical Uplink Shared Channel) shared by each user terminal 20, an uplink control channel (PUCCH: Physical Uplink Control Channel), and a random access channel (PRACH: Physical Random Access Channel) as uplink channels. User data and higher layer control information are conveyed on the PUSCH. Furthermore, downlink radio quality information (CQI: Channel Quality Indicator), transmission acknowledgement information and a Scheduling Request (SR) are conveyed on the PUCCH. A random access preamble for establishing connection with a cell is conveyed on the PRACH.

The radio communication system 1 conveys a Cell-specific Reference Signal (CRS), a Channel State Information-Reference Signal (CSI-RS), a DeModulation Reference Signal (DMRS) and a Positioning Reference Signal (PRS) as downlink reference signals. Furthermore, the radio communication system 1 conveys a Sounding Reference Signal (SRS) and a DeModulation Reference Signal (DMRS) as uplink reference signals. In this regard, the DMRS may be referred to as a user terminal-specific reference signal (UE-specific reference signal). Furthermore, a reference signal to be conveyed is not limited to these.

### (Radio Base Station)

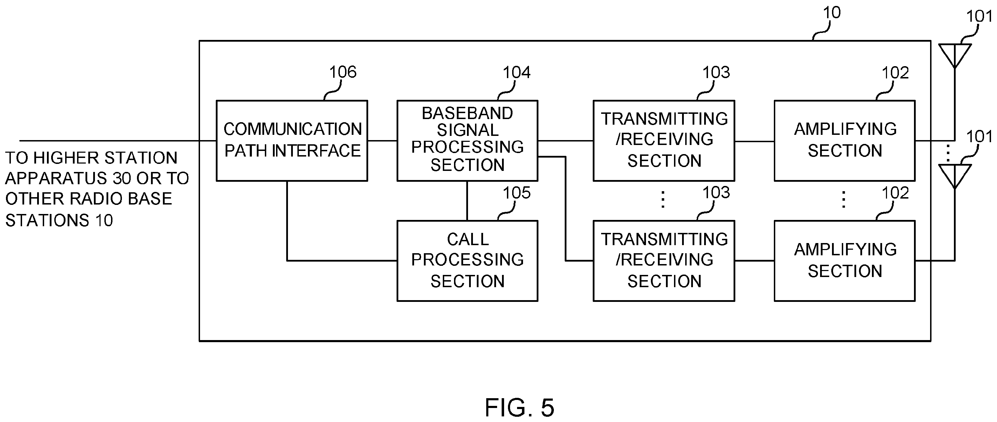

Fig. 5 is a diagram illustrating one example of an overall configuration of the radio base station according to the one embodiment. The radio base station 10 includes pluralities of transmitting/receiving antennas 101, amplifying sections 102 and transmitting/receiving sections 103, a baseband signal processing section 104, a call processing section 105 and a channel interface 106. In this regard, the radio base station 10 only needs to be configured to include one or more of each of the transmitting/receiving antennas 101, the amplifying sections 102 and the transmitting/receiving sections 103.

User data transmitted from the radio base station 10 to the user terminal 20 on downlink is input from the higher station apparatus 30 to the baseband signal processing section 104 via the channel interface 106.

The baseband signal processing section 104 performs processing of a Packet Data Convergence Protocol (PDCP) layer, segmentation and concatenation of the user data, transmission processing of a Radio Link Control (RLC) layer such as RLC retransmission control, Medium Access Control (MAC) retransmission control (e.g., HARQ transmission processing), and transmission processing such as scheduling, transmission format selection, channel coding, Inverse Fast Fourier Transform (IFFT) processing, and precoding processing on the user data, and transfers the user data to each transmitting/receiving section 103. Furthermore, the baseband signal processing section 104 performs transmission processing such as channel coding and inverse fast Fourier transform on a downlink control signal, too, and transfers the downlink control signal to each transmitting/receiving section 103.

Each transmitting/receiving section 103 converts a baseband signal precoded and output per antenna from the baseband signal processing section 104 into a radio frequency range, and transmits a radio frequency signal. The radio frequency signal subjected to frequency conversion by each transmitting/receiving section 103 is amplified by each amplifying section 102, and is transmitted from each transmitting/receiving antenna 101. The transmitting/receiving sections 103 can be composed of transmitters/receivers, transmitting/receiving circuits or transmitting/receiving apparatuses described based on a common knowledge in a technical field according to the present disclosure. In this regard, the transmitting/receiving sections 103 may be composed as an integrated transmitting/receiving section or may be composed of transmitting sections and reception sections.

Meanwhile, each amplifying section 102 amplifies a radio frequency signal received by each transmitting/receiving antenna 101 as an uplink signal. Each transmitting/receiving section 103 receives the uplink signal amplified by each amplifying section 102. Each transmitting/receiving section 103 performs frequency conversion on the received signal into a baseband signal, and outputs the baseband signal to the baseband signal processing section 104.

The baseband signal processing section 104 performs Fast Fourier Transform (FFT) processing, Inverse Discrete Fourier Transform (IDFT) processing, error correcting decoding, MAC retransmission control reception processing, and reception processing of an RLC layer and a PDCP layer on user data included in the input uplink signal, and transfers the user data to the higher station apparatus 30 via the channel interface 106. The call processing section 105 performs call processing (such as a configuration and release) of a communication channel, state management of the radio base station 10 and radio resource management.

The channel interface 106 transmits and receives signals to and from the higher station apparatus 30 via a given interface. Furthermore, the channel interface 106 may transmit and receive (backhaul signaling) signals to and from the another radio base station 10 via an inter-base station interface (e.g., optical fibers compliant with the Common Public Radio Interface (CPRI) or the X2 interface).

In addition, each transmitting/receiving section 103 may further include an analog beam forming section that performs analog beam forming. The analog beam forming section can be composed of an analog beam forming circuit (e.g., a phase shifter or a phase shift circuit) or an analog beam forming apparatus (e.g., a phase shifter) described based on the common knowledge in the technical field according to the present disclosure. Furthermore, each transmitting/receiving antenna 101 may be composed of an array antenna, for example.

Each transmitting/receiving section 103 may receive a PHR. Each transmitting/receiving section 103 may transmit information related to a step size and/or a range, and a TPC command to the user terminal 20.

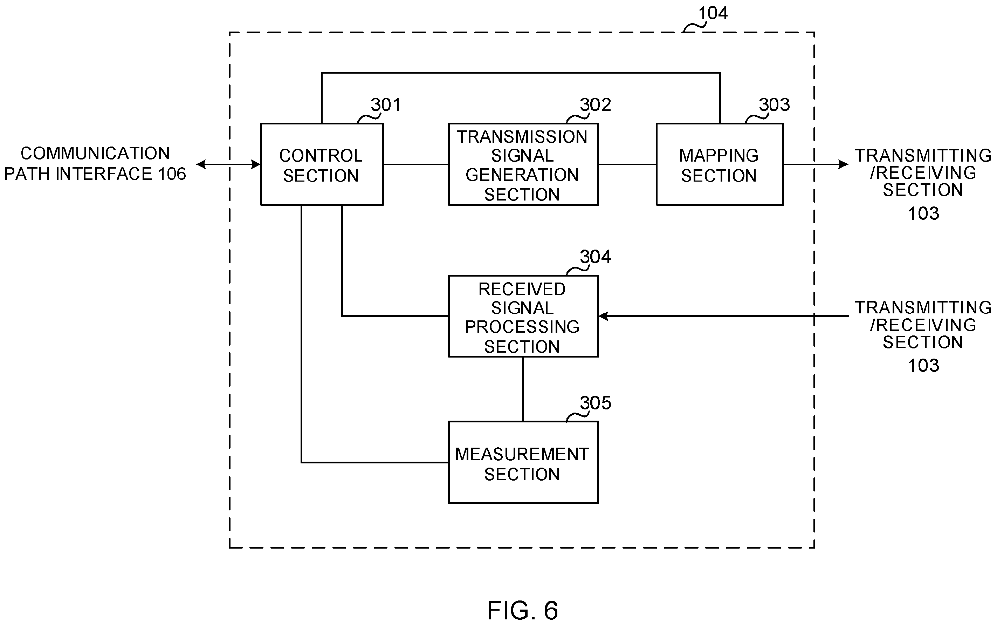

Fig. 6 is a diagram illustrating one example of a function configuration of the radio base station according to the one embodiment. In addition, this example mainly illustrates function blocks of characteristic portions according to the present embodiment, and assumes that the radio base station 10 includes other function blocks, too, that are necessary for radio communication.

The baseband signal processing section 104 includes at least a control section (scheduler) 301, a transmission signal generating section 302, a mapping section 303, a received signal processing section 304 and a measurement section 305. In addition, these components only need to be included in the radio base station 10, and part or all of the components may not be included in the baseband signal processing section 104.

The control section (scheduler) 301 controls the entire radio base station 10. The control section 301 can be composed of a controller, a control circuit or a control apparatus described based on the common knowledge in the technical field according to the present disclosure.

The control section 301 controls, for example, signal generation of the transmission signal generating section 302 and signal allocation of the mapping section 303. Furthermore, the control section 301 controls signal reception processing of the received signal processing section 304 and signal measurement of the measurement section 305.

The control section 301 controls scheduling (e.g., resource allocation) of system information, a downlink data signal (e.g., a signal that is transmitted on the PDSCH), and a downlink control signal (e.g., a signal that is transmitted on the PDCCH and/or the EPDCCH and is, for example, transmission acknowledgement information). Furthermore, the control section 301 controls generation of a downlink control signal and a downlink data signal based on a result obtained by deciding whether or not it is necessary to perform retransmission control on an uplink data signal. Furthermore, the control section 301 controls scheduling of synchronization signals (e.g., a Primary Synchronization Signal (PSS)/a Secondary Synchronization Signal (SSS)) and downlink reference signals (e.g., a CRS, a CSI-RS and a DMRS).

Furthermore, the control section 301 controls scheduling of an uplink data signal (e.g., a signal that is transmitted on the PUSCH), an uplink control signal (e.g., a signal that is transmitted on the PUCCH and/or the PUSCH and is, for example, transmission acknowledgement information), a random access preamble (e.g., a signal that is transmitted on the PRACH) and an uplink reference signal.

The control section 301 may perform control for transmitting information for transmit power control to the user terminal 20. The control section 301 may perform control for transmitting the above information for transmit power control based on the PHR received from the user terminal 20.

The control section 301 may determine a step size of a value of a PH per increase of an index related to the PH (PH field), or a range of a value of the PH associated with the index based on a given condition. The control section 301 may determine a step size of a value of P_{CMAX,c} per increase of an index related to P_{CMAX,c} (P_{CMAX,c} field), or a range of the value of P_{CMAX,c} associated with the index based on a given condition. These given conditions may be determination conditions described in (1) to (6) of the above-described embodiment.

The transmission signal generating section 302 generates a downlink signal (such as a downlink control signal, a downlink data signal or a downlink reference signal) based on an instruction from the control section 301, and outputs the downlink signal to the mapping section 303. The transmission signal generating section 302 can be composed of a signal generator, a signal generating circuit or a signal generating apparatus described based on the common knowledge in the technical field according to the present disclosure.

The transmission signal generating section 302 generates, for example, a DL assignment for giving notification of downlink data allocation information, and/or a UL grant for giving notification of uplink data allocation information based on the instruction from the control section 301. The DL assignment and the UL grant are both DCI, and conform to a DCI format. Furthermore, the transmission signal generating section 302 performs encoding processing and modulation processing on the downlink data signal according to a code rate and a modulation scheme determined based on Channel State Information (CSI) from each user terminal 20.

The mapping section 303 maps the downlink signal generated by the transmission signal generating section 302, on given radio resources based on the instruction from the control section 301, and outputs the downlink signal to each transmitting/receiving section 103. The mapping section 303 can be composed of a mapper, a mapping circuit or a mapping apparatus described based on the common knowledge in the technical field according to the present disclosure.

The received signal processing section 304 performs reception processing (e.g., demapping, demodulation and decoding) on a received signal input from each transmitting/receiving section 103. In this regard, the received signal is, for example, an uplink signal (such as an uplink control signal, an uplink data signal or an uplink reference signal) transmitted from the user terminal 20. The received signal processing section 304 can be composed of a signal processor, a signal processing circuit or a signal processing apparatus described based on the common knowledge in the technical field according to the present disclosure.

The received signal processing section 304 outputs information decoded by the reception processing to the control section 301. When, for example, receiving the PUCCH including HARQ-ACK, the received signal processing section 304 outputs the HARQ-ACK to the control section 301. Furthermore, the received signal processing section 304 outputs the received signal and/or the signal after the reception processing to the measurement section 305.

The measurement section 305 performs measurement related to the received signal. The measurement section 305 can be composed of a measurement instrument, a measurement circuit or a measurement apparatus described based on the common knowledge in the technical field according to the present disclosure.

For example, the measurement section 305 may perform Radio Resource Management (RRM) measurement or Channel State Information (CSI) measurement based on the received signal. The measurement section 305 may measure received power (e.g., Reference Signal Received Power (RSRP)), received quality (e.g., Reference Signal Received Quality (RSRQ), a Signal to Interference plus Noise Ratio (SINR) or a Signal to Noise Ratio (SNR)), a signal strength (e.g., a Received Signal Strength Indicator (RSSI)) or channel information (e.g., CSI). The measurement section 305 may output a measurement result to the control section 301.

### (User Terminal)

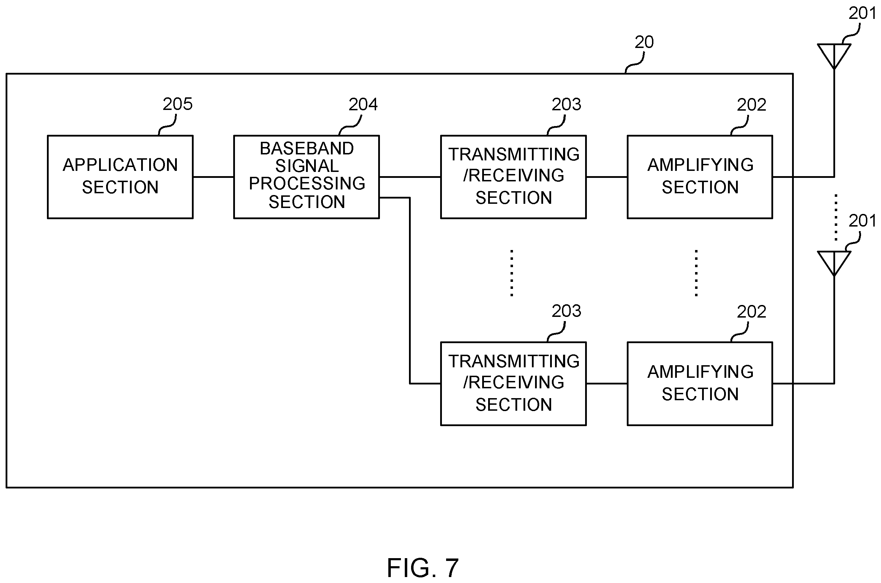

Fig. 7 is a diagram illustrating one example of an overall configuration of the user terminal according to the one embodiment. The user terminal 20 includes pluralities of transmitting/receiving antennas 201, amplifying sections 202 and transmitting/receiving sections 203, a baseband signal processing section 204 and an application section 205. In this regard, the user terminal 20 only needs to be configured to include one or more of each of the transmitting/receiving antennas 201, the amplifying sections 202 and the transmitting/receiving sections 203.

Each amplifying section 202 amplifies a radio frequency signal received at each transmitting/receiving antenna 201. Each transmitting/receiving section 203 receives a downlink signal amplified by each amplifying section 202. Each transmitting/receiving section 203 performs frequency conversion on the received signal into a baseband signal, and outputs the baseband signal to the baseband signal processing section 204. The transmitting/receiving sections 203 can be composed of transmitters/receivers, transmitting/receiving circuits or transmitting/receiving apparatuses described based on the common knowledge in the technical field according to the present disclosure. In this regard, the transmitting/receiving sections 203 may be composed as an integrated transmitting/receiving section or may be composed of transmitting sections and reception sections.

The baseband signal processing section 204 performs FFT processing, error correcting decoding and retransmission control reception processing on the input baseband signal. The baseband signal processing section 204 transfers downlink user data to the application section 205. The application section 205 performs processing related to layers higher than a physical layer and an MAC layer. Furthermore, the baseband signal processing section 204 may transfer broadcast information of the downlink data, too, to the application section 205.

On the other hand, the application section 205 inputs uplink user data to the baseband signal processing section 204. The baseband signal processing section 204 performs retransmission control transmission processing (e.g., HARQ transmission processing), channel coding, precoding, Discrete Fourier Transform (DFT) processing and IFFT processing on the uplink user data, and transfers the uplink user data to each transmitting/receiving section 203. Each transmitting/receiving section 203 converts the baseband signal output from the baseband signal processing section 204 into a radio frequency range, and transmits a radio frequency signal. The radio frequency signal subjected to the frequency conversion by each transmitting/receiving section 203 is amplified by each amplifying section 202, and is transmitted from each transmitting/receiving antenna 201.

In addition, each transmitting/receiving section 203 may further include an analog beam forming section that performs analog beam forming. The analog beam forming section can be composed of an analog beam forming circuit (e.g., a phase shifter or a phase shift circuit) or an analog beam forming apparatus (e.g., a phase shifter) described based on the common knowledge in the technical field according to the present disclosure. Furthermore, each transmitting/receiving antenna 201 may be composed of an array antenna, for example.

Each transmitting/receiving section 203 may transmit the PHR. Each transmitting/receiving section 203 may receive the information related to the step size and/or the range, and the TPC command from the radio base station 10.

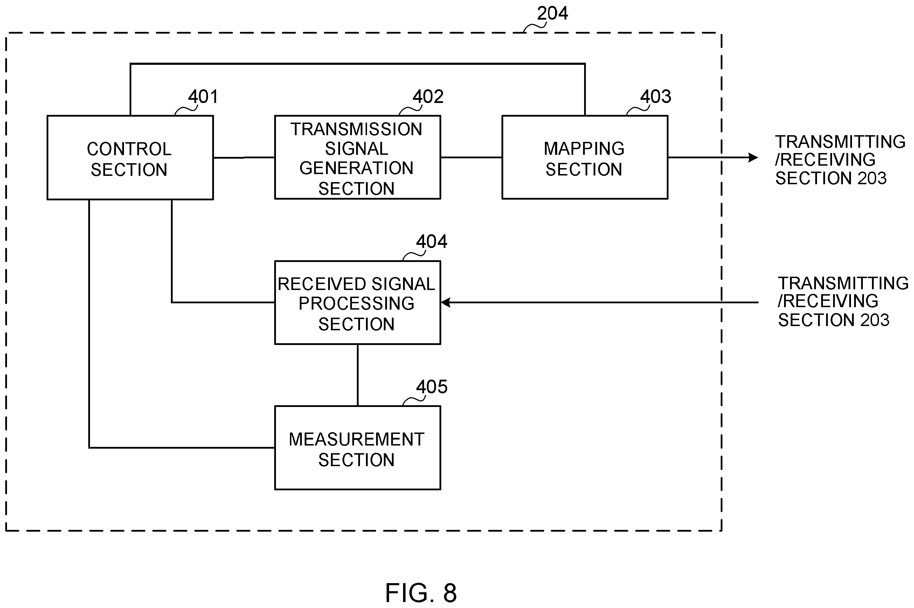

Fig. 8 is a diagram illustrating one example of a function configuration of the user terminal according to the one embodiment. In addition, this example mainly illustrates function blocks of characteristic portions according to the present embodiment, and assumes that the user terminal 20 includes other function blocks, too, that are necessary for radio communication.

The baseband signal processing section 204 of the user terminal 20 includes at least a control section 401, a transmission signal generating section 402, a mapping section 403, a received signal processing section 404 and a measurement section 405. In addition, these components only need to be included in the user terminal 20, and part or all of the components may not be included in the baseband signal processing section 204.

The control section 401 controls the entire user terminal 20. The control section 401 can be composed of a controller, a control circuit or a control apparatus described based on the common knowledge in the technical field according to the present disclosure.

The control section 401 controls, for example, signal generation of the transmission signal generating section 402 and signal allocation of the mapping section 403. Furthermore, the control section 401 controls signal reception processing of the received signal processing section 404 and signal measurement of the measurement section 405.

The control section 401 obtains from the received signal processing section 404 a downlink control signal and a downlink data signal transmitted from the radio base station 10. The control section 401 controls generation of an uplink control signal and/or an uplink data signal based on a result obtained by deciding whether or not it is necessary to perform retransmission control on the downlink control signal and/or the downlink data signal.

The control section 401 may calculate a Power Headroom (PH) associated with a given uplink signal.

The control section 401 may determine a step size of a value of a PH per increase of an index related to the PH (PH field), or a range of a value of the PH associated with the index based on a given condition. The control section 401 may determine a step size of a value of P_{CMAX,c} per increase of an index related to P_{CMAX,c} (P_{CMAX,c} field), or a range of the value of P_{CMAX,c} associated with the index based on a given condition. These given conditions may be determination conditions described in (1) to (6) of the above-described embodiment. In this regard, "determine" may be read as "assume".

The control section 401 may perform control for transmitting a Power Headroom Report (PHR) including the above-described index.

For example, the control section 401 may determine the above step size or range based on a specific bit of a PHR MAC CE used for transmission of the above PHR.

The control section 401 may determine the above step size or range based on a band used by each transmitting/receiving section 203.

The control section 401 may determine the above step size or range based on the value of P_{CMAX,c} associated with the PH field (the value of P_{CMAX,c} indicated by the P_{CMAX,c} field).

The control section 401 may determine the above step size or range based on capability of the user terminal.

The control section 401 may determine the above step size or range based on maximum transmit power of each cell group configured to the user terminal.

The control section 401 may determine the above step size or range based on an explicit signaling from the radio base station 10.

Furthermore, when obtaining from the received signal processing section 404 various pieces of information notified from the radio base station 10, the control section 401 may update parameters used for control based on the various pieces of information.

The transmission signal generating section 402 generates an uplink signal (such as an uplink control signal, an uplink data signal or an uplink reference signal) based on an instruction from the control section 401, and outputs the uplink signal to the mapping section 403. The transmission signal generating section 402 can be composed of a signal generator, a signal generating circuit or a signal generating apparatus described based on the common knowledge in the technical field according to the present disclosure.

The transmission signal generating section 402 generates, for example, an uplink control signal related to transmission acknowledgement information and Channel State Information (CSI) based on the instruction from the control section 401. Furthermore, the transmission signal generating section 402 generates an uplink data signal based on the instruction from the control section 401. When, for example, the downlink control signal notified from the radio base station 10 includes a UL grant, the transmission signal generating section 402 is instructed by the control section 401 to generate an uplink data signal.

The mapping section 403 maps the uplink signal generated by the transmission signal generating section 402, on radio resources based on the instruction from the control section 401, and outputs the uplink signal to each transmitting/receiving section 203. The mapping section 403 can be composed of a mapper, a mapping circuit or a mapping apparatus described based on the common knowledge in the technical field according to the present disclosure.

The received signal processing section 404 performs reception processing (e.g., demapping, demodulation and decoding) on the received signal input from each transmitting/receiving section 203. In this regard, the received signal is, for example, a downlink signal (such as a downlink control signal, a downlink data signal or a downlink reference signal) transmitted from the radio base station 10. The received signal processing section 404 can be composed of a signal processor, a signal processing circuit or a signal processing apparatus described based on the common knowledge in the technical field according to the present disclosure. Furthermore, the received signal processing section 404 can compose the reception section according to the present disclosure.

The received signal processing section 404 outputs information decoded by the reception processing to the control section 401. The received signal processing section 404 outputs, for example, broadcast information, system information, an RRC signaling and DCI to the control section 401. Furthermore, the received signal processing section 404 outputs the received signal and/or the signal after the reception processing to the measurement section 405.

The measurement section 405 performs measurement related to the received signal. The measurement section 405 can be composed of a measurement instrument, a measurement circuit or a measurement apparatus described based on the common knowledge in the technical field according to the present disclosure.

For example, the measurement section 405 may perform RRM measurement or CSI measurement based on the received signal. The measurement section 405 may measure received power (e.g., RSRP), received quality (e.g., RSRQ, an SINR or an SNR), a signal strength (e.g., RSSI) or channel information (e.g., CSI). The measurement section 405 may output a measurement result to the control section 401.

### (Hardware Configuration)

In addition, the block diagrams used to describe the above embodiment illustrate blocks in function units. These function blocks (components) are realized by an optional combination of hardware and/or software. Furthermore, a method for realizing each function block is not limited in particular. That is, each function block may be realized by using one physically and/or logically coupled apparatus or may be realized by using a plurality of these apparatuses formed by connecting two or more physically and/or logically separate apparatuses directly and/or indirectly (by using, for example, wired connection and/or radio connection).

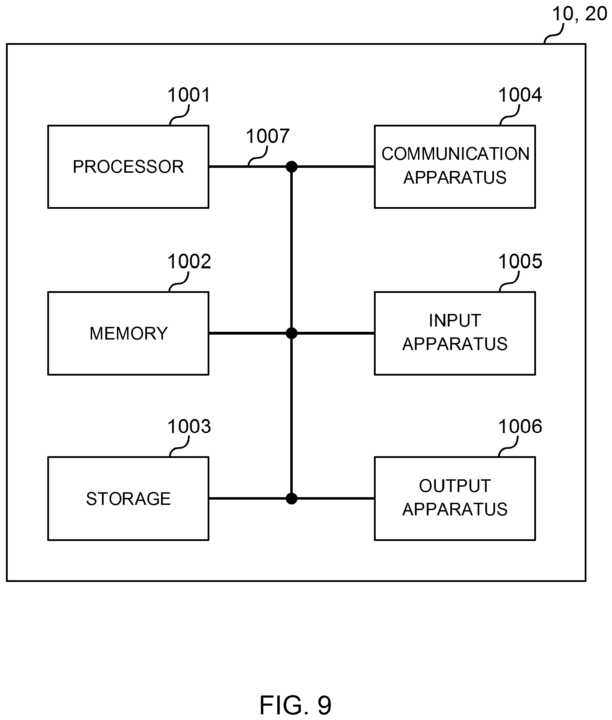

For example, the radio base station and the user terminal according to the one embodiment may function as computers that perform processing of the radio communication method according to the present disclosure. Fig. 9 is a diagram illustrating one example of the hardware configurations of the radio base station and the user terminal according to one embodiment. The above-described radio base station 10 and user terminal 20 may be each physically configured as a computer apparatus that includes a processor 1001, a memory 1002, a storage 1003, a communication apparatus 1004, an input apparatus 1005, an output apparatus 1006 and a bus 1007.

In this regard, a word "apparatus" in the following description can be read as a circuit, a device or a unit. The hardware configurations of the radio base station 10 and the user terminal 20 may be configured to include one or a plurality of apparatuses illustrated in Fig. 9 or may be configured without including part of the apparatuses.

For example, Fig. 9 illustrates the only one processor 1001. However, there may be a plurality of processors. Furthermore, processing may be executed by 1 processor or processing may be executed by 1 or more processors concurrently or successively or by using another method. In addition, the processor 1001 may be implemented by 1 or more chips.

Each function of the radio base station 10 and the user terminal 20 is realized by, for example, causing hardware such as the processor 1001 and the memory 1002 to read given software (program), and thereby causing the processor 1001 to perform an operation, and control communication via the communication apparatus 1004 and control reading and/or writing of data in the memory 1002 and the storage 1003.

The processor 1001 causes, for example, an operating system to operate to control the entire computer. The processor 1001 may be composed of a Central Processing Unit (CPU) including an interface for a peripheral apparatus, a control apparatus, an operation apparatus and a register. For example, the above-described baseband signal processing section 104 (204) and call processing section 105 may be realized by the processor 1001.

Furthermore, the processor 1001 reads programs (program codes), a software module or data from the storage 1003 and/or the communication apparatus 1004 out to the memory 1002, and executes various types of processing according to these programs, software module or data. As the programs, programs that cause the computer to execute at least part of the operations described in the above-described embodiment are used. For example, the control section 401 of the user terminal 20 may be realized by a control program that is stored in the memory 1002 and operates on the processor 1001, and other function blocks may be also realized likewise.

The memory 1002 is a computer-readable recording medium, and may be composed of at least one of, for example, a Read Only Memory (ROM), an Erasable Programmable ROM (EPROM), an Electrically EPROM (EEPROM), a Random Access Memory (RAM) and other appropriate storage media. The memory 1002 may be referred to as a register, a cache or a main memory (main storage apparatus). The memory 1002 can store programs (program codes) and a software module that can be executed to perform the radio communication method according to the one embodiment.

The storage 1003 is a computer-readable recording medium, and may be composed of at least one of, for example, a flexible disk, a floppy (registered trademark) disk, a magnetooptical disk (e.g., a compact disk (Compact Disc ROM (CD-ROM)), a digital versatile disk and a Blu-ray (registered trademark) disk), a removable disk, a hard disk drive, a smart card, a flash memory device (e.g., a card, a stick or a key drive), a magnetic stripe, a database, a server and other appropriate storage media. The storage 1003 may be referred to as an auxiliary storage apparatus.

The communication apparatus 1004 is hardware (transmitting/receiving device) that performs communication between computers via wired and/or radio networks, and will be also referred to as, for example, a network device, a network controller, a network card and a communication module. The communication apparatus 1004 may be configured to include a high frequency switch, a duplexer, a filter and a frequency synthesizer to realize, for example, Frequency Division Duplex (FDD) and/or Time Division Duplex (TDD). For example, the above-described transmitting/receiving antennas 101 (201), amplifying sections 102 (202), transmitting/receiving sections 103 (203) and channel interface 106 may be realized by the communication apparatus 1004.

The input apparatus 1005 is an input device (e.g., a keyboard, a mouse, a microphone, a switch, a button or a sensor) that accepts an input from an outside. The output apparatus 1006 is an output device (e.g., a display, a speaker or a Light Emitting Diode (LED) lamp) that sends an output to the outside. In addition, the input apparatus 1005 and the output apparatus 1006 may be an integrated component (e.g., touch panel).

Furthermore, each apparatus such as the processor 1001 or the memory 1002 is connected by the bus 1007 that communicates information. The bus 1007 may be composed by using a single bus or may be composed by using different buses between apparatuses.

Furthermore, the radio base station 10 and the user terminal 20 may be configured to include hardware such as a microprocessor, a Digital Signal Processor (DSP), an Application Specific Integrated Circuit (ASIC), a Programmable Logic Device (PLD) and a Field Programmable Gate Array (FPGA). The hardware may be used to realize part or all of each function block. For example, the processor 1001 may be implemented by using at least one of these types of hardware.

### (Modified Example)

In addition, each term that has been described in this description and/or each term that is necessary to understand this description may be replaced with terms having identical or similar meanings. For example, a channel and/or a symbol may be signals (signalings). Furthermore, a signal may be a message. A reference signal can be also abbreviated as an RS (Reference Signal), or may be also referred to as a pilot or a pilot signal depending on standards to be applied. Furthermore, a Component Carrier (CC) may be referred to as a cell, a frequency carrier and a carrier frequency.

Furthermore, a radio frame may include one or a plurality of durations (frames) in a time domain. Each of one or a plurality of durations (frames) that composes a radio frame may be referred to as a subframe. Furthermore, the subframe may include one or a plurality of slots in the time domain. The subframe may be a fixed time duration (e.g., 1 ms) that does not depend on the numerologies.

Furthermore, the slot may include one or a plurality of symbols (Orthogonal Frequency Division Multiplexing (OFDM) symbols or Single Carrier-Frequency Division Multiple Access (SC-FDMA) symbols) in the time domain. Furthermore, the slot may be a time unit based on the numerologies. Furthermore, the slot may include a plurality of mini slots. Each mini slot may include one or a plurality of symbols in the time domain. Furthermore, the mini slot may be referred to as a subslot.

The radio frame, the subframe, the slot, the mini slot and the symbol each indicate a time unit for conveying signals. The other corresponding names may be used for the radio frame, the subframe, the slot, the mini slot and the symbol. For example, 1 subframe may be referred to as a Transmission Time Interval (TTI), a plurality of contiguous subframes may be referred to as TTIs, or 1 slot or 1 mini slot may be referred to as a TTI. That is, the subframe and/or the TTI may be a subframe (1 ms) according to legacy LTE, may be a duration (e.g., 1 to 13 symbols) shorter than 1 ms or may be a duration longer than 1 ms. In addition, a unit that indicates the TTI may be referred to as a slot or a mini slot instead of a subframe.

In this regard, the TTI refers to, for example, a minimum time unit of scheduling for radio communication. For example, in the LTE system, the radio base station performs scheduling for allocating radio resources (a frequency bandwidth or transmission power that can be used in each user terminal) in TTI units to each user terminal. In this regard, a definition of the TTI is not limited to this.

The TTI may be a transmission time unit of a channel-coded data packet (transport block), code block and/or codeword, or may be a processing unit of scheduling or link adaptation. In addition, when the TTI is given, a time period (e.g., the number of symbols) in which a transport block, a code block and/or a codeword are actually mapped may be shorter than the TTI.

In addition, when 1 slot or 1 mini slot is referred to as a TTI, 1 or more TTIs (i.e., 1 or more slots or 1 or more mini slots) may be a minimum time unit of scheduling. Furthermore, the number of slots (the number of mini slots) that compose a minimum time unit of the scheduling may be controlled.

The TTI having the time duration of 1 ms may be referred to as a general TTI (TTIs according to LTE Rel. 8 to 12), a normal TTI, a long TTI, a general subframe, a normal subframe or a long subframe. A TTI shorter than the general TTI may be referred to as a reduced TTI, a short TTI, a partial or fractional TTI, a reduced subframe, a short subframe, a mini slot or a subslot.

In addition, the long TTI (e.g., the general TTI or the subframe) may be read as a TTI having a time duration exceeding 1 ms, and the short TTI (e.g., the reduced TTI) may be read as a TTI having a TTI length less than the TTI length of the long TTI and equal to or more than 1 ms.

A Resource Block (RB) is a resource allocation unit of the time domain and the frequency domain, and may include one or a plurality of contiguous subcarriers in the frequency domain. Furthermore, the RB may include one or a plurality of symbols in the time domain or may have the length of 1 slot, 1 mini slot, 1 subframe or 1 TTI. 1 TTI or 1 subframe may each include one or a plurality of resource blocks. In this regard, one or a plurality of RBs may be referred to as a Physical Resource Block (PRB: Physical RB), a Sub-Carrier Group (SCG), a Resource Element Group (REG), a PRB pair or an RB pair.

Furthermore, the resource block may include one or a plurality of Resource Elements (REs). For example, 1 RE may be a radio resource domain of 1 subcarrier and 1 symbol.

In this regard, structures of the above-described radio frame, subframe, slot, mini slot and symbol are only exemplary structures. For example, configurations such as the number of subframes included in a radio frame, the number of slots per subframe or radio frame, the number of mini slots included in a slot, the numbers of symbols and RBs included in a slot or a mini slot, the number of subcarriers included in an RB, the number of symbols in a TTI, a symbol length and a Cyclic Prefix (CP) length can be variously changed.

Furthermore, the information and parameters described in this description may be expressed by using absolute values, may be expressed by using relative values with respect to given values or may be expressed by using other corresponding information. For example, a radio resource may be instructed by a given index.

Names used for parameters in this description are in no respect restrictive names. For example, various channels (the Physical Uplink Control Channel (PUCCH) and the Physical Downlink Control Channel (PDCCH)) and information elements can be identified based on various suitable names. Therefore, various names assigned to these various channels and information elements are in no respect restrictive names.

The information and the signals described in this description may be expressed by using one of various different techniques. For example, the data, the instructions, the commands, the information, the signals, the bits, the symbols and the chips mentioned in the above entire description may be expressed as voltages, currents, electromagnetic waves, magnetic fields or magnetic particles, optical fields or photons, or optional combinations of these.

Furthermore, the information and the signals can be output from a higher layer to a lower layer and/or from the lower layer to the higher layer. The information and the signals may be input and output via a plurality of network nodes.

The input and output information and signals may be stored in a specific location (e.g., memory) or may be managed by using a management table. The information and signals to be input and output can be overwritten, updated or additionally written. The output information and signals may be deleted. The input information and signals may be transmitted to other apparatuses.

Notification of information is not limited to the aspect/embodiment described in this description and may be performed by using other methods. For example, the information may be notified by a physical layer signaling (e.g., Downlink Control Information (DCI) and Uplink Control Information (UCI)), a higher layer signaling (e.g., a Radio Resource Control (RRC) signaling, broadcast information (a Master Information Block (MIB) and a System Information Block (SIB)), and a Medium Access Control (MAC) signaling), other signals or combinations of these.

In addition, the physical layer signaling may be referred to as Layer 1/Layer 2 (L1/L2) control information (L1/L2 control signal) or L1 control information (L1 control signal). Furthermore, the RRC signaling may be referred to as an RRC message, and may be, for example, an RRCConnectionSetup message or an RRCConnectionReconfiguration message. Furthermore, the MAC signaling may be notified by using, for example, an MAC Control Element (MAC CE).

Furthermore, notification of given information (e.g., notification of "being X") is not limited to explicit notification, and may be given implicitly (by, for example, not giving notification of the given information or by giving notification of another information).

Decision may be made based on a value (0 or 1) expressed as 1 bit, may be made based on a boolean expressed as true or false or may be made by comparing numerical values (by, for example, making comparison with a given value).

Irrespectively of whether software is referred to as software, firmware, middleware, a microcode or a hardware description language or is referred to as other names, the software should be widely interpreted to mean a command, a command set, a code, a code segment, a program code, a program, a subprogram, a software module, an application, a software application, a software package, a routine, a subroutine, an object, an executable file, an execution thread, a procedure or a function.

Furthermore, software, commands and information may be transmitted and received via transmission media. When, for example, the software is transmitted from websites, servers or other remote sources by using wired techniques (e.g., coaxial cables, optical fiber cables, twisted pairs and Digital Subscriber Lines (DSLs)) and/or radio techniques (e.g., infrared rays and microwaves), these wired techniques and/or radio techniques are included in a definition of the transmission media.

The terms "system" and "network" used in this description are interchangeably used.

In this description, the terms "Base Station (BS)", "radio base station", "eNB", "gNB", "cell", "sector", "cell group", "carrier" and "component carrier" can be interchangeably used. The base station will be also referred to as a term such as a fixed station, a NodeB, an eNodeB (eNB), a gNB, an access point, a transmission point, a reception point, a femtocell or a small cell in some cases.

The base station can accommodate one or a plurality of (e.g., three) cells (also referred to as sectors). When the base station accommodates a plurality of cells, an entire coverage area of the base station can be partitioned into a plurality of smaller areas. Each smaller area can also provide a communication service via a base station subsystem (e.g., indoor small base station (RRH: Remote Radio Head)). The term "cell" or "sector" indicates part or the entirety of the coverage area of the base station and/or the base station subsystem that provide a communication service in this coverage.

In this description, the terms "Mobile Station (MS)", "user terminal", "user apparatus (UE: User Equipment)" and "terminal" can be interchangeably used. The base station will be also referred to as a term such as a fixed station, a NodeB, an eNodeB (eNB), an access point, a transmission point, a reception point, a femtocell or a small cell in some cases.

The mobile station will be also referred to by a person skilled in the art as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client or some other appropriate terms in some cases.

Furthermore, the radio base station in this description may be read as the user terminal. For example, each aspect/embodiment of the present disclosure may be applied to a configuration where communication between the radio base station and the user terminal is replaced with communication between a plurality of user terminals (D2D: Device-to-Device). In this case, the user terminal 20 may be configured to include the functions of the above-described radio base station 10. Furthermore, words such as "uplink" and "downlink" may be read as a "side". For example, the uplink channel may be read as a side channel.

Similarly, the user terminal in this description may be read as the radio base station. In this case, the radio base station 10 may be configured to include the functions of the above-described user terminal 20.

In this description, operations performed by the base station are performed by an upper node of this base station depending on cases. Obviously, in a network including one or a plurality of network nodes including the base stations, various operations performed to communicate with a terminal can be performed by base stations, one or more network nodes (that are supposed to be, for example, Mobility Management Entities (MMEs) or Serving-Gateways (S-GWs) yet are not limited to these) other than the base stations or a combination of these.

Each aspect/embodiment described in this description may be used alone, may be used in combination or may be switched and used when carried out. Furthermore, orders of the processing procedures, the sequences and the flowchart according to each aspect/embodiment described in this description may be rearranged unless contradictions arise. For example, the method described in this description presents various step elements in an exemplary order and is not limited to the presented specific order.

Each aspect/embodiment described in this description may be applied to Long Term Evolution (LTE), LTE-Advanced (LTE-A), LTE-Beyond (LTE-B), SUPER 3G, IMT-Advanced, the 4th generation mobile communication system (4G), the 5th generation mobile communication system (5G), Future Radio Access (FRA), the New Radio Access Technology (New-RAT), New Radio (NR), New radio access (NX), Future generation radio access (FX), Global System for Mobile communications (GSM) (registered trademark), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other appropriate radio communication methods and/or next-generation systems that are expanded based on these systems.

The phrase "based on" used in this description does not mean "based only on" unless specified otherwise. In other words, the phrase "based on" means both of "based only on" and "based at least on".

Every reference to elements that use names such as "first" and "second" used in this description does not generally limit the quantity or the order of these elements. These names can be used in this description as a convenient method for distinguishing between two or more elements. Hence, the reference to the first and second elements does not mean that only two elements can be employed or the first element should precede the second element in some way.

The term "deciding (determining)" used in this description includes diverse operations in some cases. For example, "deciding (determining)" may be regarded to "decide (determine)" calculating, computing, processing, deriving, investigating, looking up (e.g., looking up in a table, a database or another data structure) and ascertaining. Furthermore, "deciding (determining)" may be regarded to "decide (determine)" receiving (e.g., receiving information), transmitting (e.g., transmitting information), input, output and accessing (e.g., accessing data in a memory). Furthermore, "deciding (determining)" may be regarded to "decide (determine)" resolving, selecting, choosing, establishing and comparing. That is, "deciding (determining)" may be regarded to "decide (determine)" some operation.

The words "connected" and "coupled" used in this description or every modification of these words can mean every direct or indirect connection or coupling between 2 or more elements, and can include that 1 or more intermediate elements exist between the two elements "connected" or "coupled" with each other. The elements may be coupled or connected physically or logically or by a combination of these physical and logical connections. For example, "connection" may be read as "access".

It can be understood in this description that, when connected, the two elements are "connected" or "coupled" with each other by using 1 or more electric wires, cables and/or printed electrical connection, and by using electromagnetic energy having wavelengths in radio frequency domains, microwave domains and/or (both of visible and invisible) light domains in some non-restrictive and non-comprehensive examples.

A sentence that "A and B are different" in this description may mean that "A and B are different from each other". Words such as "separate" and "coupled" may be also interpreted in a similar manner.

When the words "including" and "comprising" and modifications of these words are used in this description or the claims, these words intend to be comprehensive similar to the word "having". Furthermore, the word "or" used in this description or the claims intends not to be an exclusive OR.

The invention according to the present disclosure has been described in detail above. However, it is obvious for a person skilled in the art that the invention according to the present disclosure is not limited to the embodiment described in this description. The invention according to the present disclosure can be carried out as modified and changed aspects without departing from the scope of the invention defined based on the recitation of the claims. Accordingly, the disclosure of this description is intended for exemplary explanation, and does not bring any restrictive meaning to the invention according to the present disclosure.

## Claims

1. A terminal (20) comprising:
a control section (401) configured to determine, based on a threshold of a value of a Power Headroom, PH, a step size of the value of PH per increase of an index related to the PH; and
a transmitting section (203) configured to transmit a Power Headroom Report, PHR, including the index;
wherein the step size includes a first value and a second value, the first value being one and the second value being two, and
a value of a PH associated with the index by which the step size is determined to be the second value is larger than a value of a PH associated with the index by which the step size is determined to be the first value.

2. The terminal (20) according to claim 1, wherein the transmitting section (203) is configured to transmit an index related to maximum transmit power, and the step size is determined independently from the maximum transmit power.

3. A radio communication method for a terminal (20), comprising:
determining, based on a threshold of a value of a Power Headroom, PH, a step size of the value of PH per increase of an index related to the PH; and
transmitting a Power Headroom Report, PHR, including the index;
wherein the step size includes a first value and a second value, the first value being one and the second value being two, and
a value of PH associated with the index by which the step size is determined to be the second value is larger than a value of PH associated with the index by which the step size is determined to be the first value.

4. A system comprising a terminal (20) and a base station (10), wherein
the terminal (20) comprises:
a control section (401) configured to determine, based on a threshold of a value of a Power Headroom, PH, a step size of the value of PH per increase of an index related to the PH; and
a transmitting section (203) configured to transmit a Power Headroom Report, PHR, including the index, and
the base station (10) comprises a receiving section (103) configured to receive the PHR;
wherein the step size includes a first value and a second value, the first value being one and the second value being two, and
a value of PH associated with the index by which the step size is determined to be the second value is larger than a value of PH associated with the index by which the step size is determined to be the first value.

## Patentansprüche

1. Endgerät (20), umfassend:
einen Steuerungsabschnitt (401), der so konfiguriert ist, dass er auf der Grundlage eines Schwellenwerts eines Werts einer Leistungsreserve, PH, eine Schrittweite des Werts von PH pro Anstieg eines Index bestimmt, der sich auf den PH bezieht; und
einen Sendeabschnitt (203), der so konfiguriert ist, dass er einen Leistungsreservebericht, PHR, sendet, einschließlich des Index;
wobei die Schrittweite einen ersten Wert und einen zweiten Wert einschließt, wobei der erste Wert eins ist und der zweite Wert zwei ist, und
ein Wert eines PH, der dem Index zugeordnet ist, durch den die Schrittweite als der zweite Wert bestimmt wird, größer ist als ein Wert eines PH, der dem Index zugeordnet ist, durch den die Schrittweite als der erste Wert bestimmt wird.

2. Endgerät (20) nach Anspruch 1, wobei der Sendeabschnitt (203) so konfiguriert ist, dass er einen Index sendet, der sich auf die maximale Sendeleistung bezieht, und die Schrittweite unabhängig von der maximalen Sendeleistung bestimmt wird.

3. Funkkommunikationsverfahren für ein Endgerät (20), umfassend:
Bestimmen, basierend auf einem Schwellenwert einer Leistungsreserve, PH, einer Schrittweite des Werts PH pro Erhöhung eines Index, der sich auf den PH bezieht; und
Senden eines Leistungsreserveberichts, PHR, einschließlich des Index;
wobei die Schrittweite einen ersten Wert und einen zweiten Wert einschließt, wobei der erste Wert eins ist und der zweite Wert zwei ist, und
ein Wert von PH, der dem Index zugeordnet ist, durch den die Schrittgröße als der zweite Wert bestimmt wird, größer ist als ein Wert von PH, der dem Index zugeordnet ist, durch den die Schrittgröße als der erste Wert bestimmt wird.

4. System, umfassend ein Endgerät (20) und eine Basisstation (10), wobei
das Endgerät (20) Folgendes umfasst:
einen Steuerungsabschnitt (401), der so konfiguriert ist, dass er auf der Grundlage eines Schwellenwerts eines Werts einer Leistungsreserve, PH, eine Schrittweite des Werts von PH pro Anstieg eines dem PH zugeordneten Index bestimmt; und
einen Sendeabschnitt (203), der so konfiguriert ist, dass er einen Leistungsreservebericht, PHR, sendet, einschließlich des Index; und
die Basisstation (10) einen Empfangsabschnitt (103) umfasst, der zum Empfangen des PHR konfiguriert ist;
wobei die Schrittweite einen ersten Wert und einen zweiten Wert einschließt, wobei der erste Wert eins ist und der zweite Wert zwei ist, und
ein Wert von PH, der dem Index zugeordnet ist, durch den die Schrittgröße als der zweite Wert bestimmt wird, größer ist als ein Wert von PH, der dem Index zugeordnet ist, durch den die Schrittgröße als der erste Wert bestimmt wird.

## Revendications

1. Terminal (20) comprenant :
une section de commande (401) configurée pour déterminer, sur la base d'un seuil d'une valeur d'une marge de puissance, PH, une taille de pas de la valeur de PH par augmentation d'un indice lié à la PH ; et
une section de transmission (203) configurée pour transmettre un rapport de marge de puissance, PHR, incluant l'indice ;
dans lequel la taille de pas inclut une première valeur et une seconde valeur, la première valeur étant un et la seconde valeur étant deux, et
une valeur d'une PH associée à l'indice par lequel la taille de pas est déterminée comme étant la seconde valeur est supérieure à une valeur d'une PH associée à l'indice par lequel la taille de pas est déterminée comme étant la première valeur.

2. Terminal (20) selon la revendication 1, dans lequel la section de transmission (203) est configurée pour transmettre un indice lié à une puissance de transmission maximale, et la taille de pas est déterminée indépendamment de la puissance de transmission maximale.

3. Procédé de communication radio pour un terminal (20), comprenant :
la détermination, sur la base d'un seuil d'une valeur d'une marge de puissance, PH, d'une taille de pas de la valeur de PH par augmentation d'un indice lié à la PH ; et
la transmission d'un rapport de marge de puissance, PHR, incluant l'indice ;
dans lequel la taille de pas inclut une première valeur et une seconde valeur, la première valeur étant un et la seconde valeur étant deux, et
une valeur de PH associée à l'indice par lequel la taille de pas est déterminée comme étant la seconde valeur est supérieure à une valeur de PH associée à l'indice par lequel la taille de pas est déterminée comme étant la première valeur.

4. Système comprenant un terminal (20) et une station de base (10), dans lequel
le terminal (20) comprend :
une section de commande (401) configurée pour déterminer, sur la base d'un seuil d'une valeur d'une marge de puissance, PH, une taille de pas de la valeur de PH par augmentation d'un indice lié à la PH ; et
une section de transmission (203) configurée pour transmettre un rapport de marge de puissance, PHR, incluant l'indice, et
la station de base (10) comprend une section de réception (103) configurée pour recevoir le PHR ;
dans lequel la taille de pas inclut une première valeur et une seconde valeur, la première valeur étant un et la seconde valeur étant deux, et
une valeur de PH associée à l'indice par lequel la taille de pas est déterminée comme étant la seconde valeur est supérieure à une valeur de PH associée à l'indice par lequel la taille de pas est déterminée comme étant la première valeur.
